# EUROPEAN PATENT APPLICATION

(11) **EP 2 703 579 A2**
(43) Date of publication of application: **05.03.2014**
(21) Application number: 13181154.9
(22) Date of filing: 21.08.2013
(51) Int. Cl.: E04G 5/14, E04G 7/22, E04G 7/30

(54) **Connection device**

(30) Priority: 31.08.2012 GB 201215539
(71) Applicant: Hewson, Peter G., Leeds, West Yorkshire LS27 7JU (GB); Brine, David, Leeds, West Yorkshire LS27 7JU (GB)
(72) Inventor: Hewson, Peter G., Leeds, West Yorkshire LS27 7JU (GB); Brine, David, Leeds, West Yorkshire LS27 7JU (GB)
(74) Representative: Tomkinson, Alexandra

(57) **Abstract**

A connection device is provided including a body portion and at least first and second attachment means for the attachment of the device to or between two or more objects in use. Adjustment means are provided to allow the distance between the at least first and second attachment means to be adjustable in use.

## Description

The present invention relates to a connection device for connecting two or more objects together, a method of using the connection device, and a barrier system incorporating one or more connection devices and a method of use thereof.

Although the present description refers to a connection device for use in connecting two or more parts of a temporary safety fence or barrier assembly in the construction industry, it will be appreciated by those skilled in the art that the connection device of the present invention can be used in any suitable application for connecting two or more parts together and could be for either temporary or permanent use.

Conventional stair systems and/or stairways used on construction sites are usually temporary structures that are assembled from components parts. Such systems include a plurality of treads or stair plates bordered by stair rails or hand rails to prevent a user from falling from the stairs. The stair or hand rails are arranged such that a user can grip the rails to assist in their assent or descent of the stair system. In addition, such stair systems often include horizontal landing portions or surfaces along which a user can walk, often situated where the stair treads change direction. These landing portions are also bordered by railings or barriers for safety.

It is a recognised problem that conventional stairway railings, particularly on building sites, are difficult and time consuming to fit and assemble. In addition, the component parts of the system, and in particular the rails, have to be cut to length and attached together using numerous fittings which are usually sourced in an ad-hoc fashion and are often lost during assembly and/or disassembly of the stairway.

It is therefore an aim of the present invention to provide a connection device that addresses the abovementioned problems.

It is a further aim of the present invention to provide a stairway and/or stair rail system that addresses the abovementioned problems.

It is a yet further aim of the present invention to provide a method of using a connection device.

It is a yet further aim of the present invention to provide a method of assembling a stairway and/or stair rail system that addresses the abovementioned problems.

In a first aspect of the invention there is provided a connection device, said connection device including a body portion and at least first and second attachment means for the attachment of the device to or between two or more objects in use, wherein adjustment means are provided to allow the distance between the at least first and second attachment means to be adjustable in use.

Preferably the adjustment means are arranged such that the distance between the at least first and second attachment means is as a result of movement of at least a part of the body portion relative to another part of the body portion and/or to the first and/or second attachment means, and/or by movement of one of the at least first and second attachment means relative to the other of the at least first and second attachment means.

Thus, the present invention provides a connection device wherein the position of the attachment means provided on or associated therewith can be adjusted, selected and/or varied by a user such that the device can connect or otherwise bridge two or more objects together in use. For example, the connection device can be used to connect two or more hand rails of a stair way system in use. The device can be used irrespective of the distance between the rails and thus the device can be used on rails positioned at various different distances apart from each other.

In one embodiment the adjustment means are adjustable by a user between one of a plurality of arbitrary or required user selected positions. However, the adjustment means can be arranged such that they allow adjustment of the relative position of the attachment means by a user between one of a plurality of pre-determined positions.

Preferably at least one of the objects with which the connection device is used in use is a rail, hand rail or stair rail. Further preferably two or more of the objects with which the connection device is used are rails, hand rails or stair rails.

In one embodiment the body portion includes at least first and second members.

Preferably the first attachment means is provided on or associated with the first body portion member and the second attachment means is provided on or associated with the second body portion member.

In one embodiment the at least first and second members are substantially linear in shape.

In one embodiment at least one of the at least first and second members is movable with respect of the other of the at least first and second members. Typically at least one of the members is slidably movable with respect of the other member. Further typically at least one of the members is telescopically movable or mounted with respect of the other member. Telescopic movement can be understood in this arrangement to be that at least part of one of the first and second members can be moved with respect to at least part of the other of the first and second members from a retracted position to a relatively extended position. For example, one member can be provided in substantially overlapping relation with another member in a first position and can be extended, slid or moved past the other member in a substantially linear direction towards a second position.

Movement of the at least first and second members relative to each other allows adjustment of the total length of the body portion.

Preferably at least one of the at least first and second members is capable of undergoing linear and/or substantially reciprocal movement with respect to the other member in moving between extended and retracted positions.

Preferably at least one of the at least first and second members is capable of undergoing movement along an axis substantially parallel or co-axial to the longitudinal axis of the other if the first and second members.

Preferably the at least first and/or second members are substantially hollow. Further preferably the at least first and/or second members are substantially hollow tubes.

In one embodiment the at least first and/or second members are substantially quadrilateral in form. In an alternative embodiment the at least first and/or second members are substantially cylindrical in form.

In one embodiment at least one of the first and second members is telescopically or slidably mounted inside the other of the first and second members. Typically at least one of said members can be slid inside another of said members, thereby selectively altering the length of the device to a predetermined or user-selected length.

In one embodiment a fixing means or mechanism is provided on or associated with the connection device, the adjustment means, attachment means and/or the body portion. Typically the fixing means fixes or locks the relative position of the attachment means and/or the at least first and second body portion members in use. Thus, in one embodiment, once a user has adjusted the length of the connection device to a required arrangement, the user can lock the device in that arrangement. Typically the fixed or locked position is determined by the distance between the objects or rails with which the connection device is used with in use.

Preferably the fixing means includes any one or any combination of one or more nuts and bolts, screws, clasps, buckles, clamps and/or the like.

In one embodiment the device includes at least third attachment means or post attachment means for allowing the connection device to be attached to a further object or post.

Preferably the at least third attachment means or the post attachment means is provided on or associated with at least one of the body portion members, and preferably in one embodiment the outer telescopic body portion member.

Preferably the at least third attachment means or post attachment means includes any one or any combination of one or more nut and bolt arrangements, fasteners, clasps, clamps, ties, hook and loop arrangements, toggles, catches, brackets, drop catch fastening, antiluce fastening and/or fittings to attach the connection device to a further object or post in use.

In one embodiment the post attachment means is suitable for attachment of the connection device to a substantially vertical or linear post or scaffolding pole.

Preferably the substantially vertical or linear post is of a type detailed in the applicants co-pending application EP1921226, the contents of which are hereby incorporated by reference.

In one embodiment at least one of the first and/or second attachment means is any one or any combination of one or more nut and bolt arrangements, fasteners, clasps, clamps, ties, hook and loop arrangements, toggles, catches, buckles and/or the like. Preferably at least one of the attachment means is a "dropcatch" or "Antiluce" fastening.

In one embodiment the rail or object to which the connection device is attached to in use includes one or more apertures or slots through which at least part of the attachment means can be passed to secure the connection device to said rail or object.

In one embodiment at least part of the at least first, second and/or third attachment means is movably mounted, and preferably can be rotated or pivoted about an axis.

Preferably at least part of the at least first, second and/or third attachment means is movable relative to the longitudinal axis of the connection device.

In one embodiment, one of the attachment means is in the form of an Antiluce or dropcatch fitting and said fitting can be pivoted such that they are effective in maintaining attachment to an object no matter which orientation the connection device and/or object is in.

In one embodiment the connection device and/or at least first and second body portion members is/are substantially linear and/or elongate in shape.

Preferably the connection device is orientated in use with the longitudinal axis of the device substantially parallel with a horizontal plane or stairway step. As such, the connection device can be used to bridge a gap, or form and/or extend a rail in use as part of a barrier or hand rail system.

In a second aspect of the invention there is provided a hand rail connection device, said hand rail connection device including at least a first and second linear telescopic members to allow the relative length of the device to be adjusted in use, and wherein the first and second telescopic members each include at least one attachment means for allowing attaching of said member to an object in use.

Preferably the hand rail connection device is attached substantially to one or more ends of a handrail in use. The hand rail can extend in an upwardly or downwardly direction in use. Preferably the hand rail connection device forms a substantially horizontal section of a handrail system.

In one embodiment two or more connection devices are attached or connected together to form a single unit. Typically the two or more connection devices are attached or connected together by a linking or bridging member, length of tubing and/or the like. The connection devices are typically maintained a spaced distance apart by the linking member.

Preferably the single unit comprising two or more connection devices is connected to two or more sets of rails or stair rails. Further preferably the two or more stair rail sets are aligned substantially parallel to each other and a spaced distance apart. The linking member is typically of such a length or adjustable to such a length to maintain the connection devices at a required distance substantially equal to the distance between the set of the stair rails.

In a third aspect of the invention there is provided a safety rail system suitable for use on a staircase, said safety rail system including a plurality of stair or hand rails wherein at least two substantially adjacent handrails are connected by a connection device.

Typically the connection device is detachably attached to the rails by the attachment means.

Preferably the rails are substantially elongate members.

Preferably the rails include at least one aperture formed in the same for engagement with the attachment means of the connection device.

In one embodiment the rails comprise at least first and second rail members. Typically at least one rail member is sildably movable with respect of the other rail member. Further typically the rail members are telescopic such that the length of the rail members can be adjusted to fit any length of staircase or stairwell in use.

In one embodiment the system includes one or more post means. Typically the connection device includes at least one post attachment means for attaching the device to said post.

In one embodiment the post means supports the connection device attached thereto. Typically the connection device supports one or more rails connected thereto.

In a further aspect of the present invention there is provided a method of using a connection device, said connection device including a body portion and at least first and second attachment means, said method including the steps of adjusting the distance between the at least first and second attachment means to a required distance using adjustment means and attaching the at least first and second attachment means to or between two or more objects.

In a yet further aspect of the present invention there is provided a rail system, said rail system including at least one connection device and at least one rail, the first and/or second attachment means attachable to the at least on rail in use.

In a yet further aspect of the invention there is provided a method of assembling a rail system, said rail system including a connection device and at least one rail, the method including the steps of;
- adjusting the position of attachment means of the connection device to a required position; and
- attaching the connection device to at least one rail.

Preferably the relative position of first and second attachment means is adjusted so that the attachment means are a required distance apart. Each of the attachment means is then joined to a rail to form a rail system.

In one embodiment the first and/or second attachment means are provided at or adjacent one or more ends of the connection device and further preferably an attachment means is provided at or adjacent distal ends of the at least first and second body portion members.

Preferably the third attachment means is provided between the first and second attachment means and further preferably is provided at some point between the ends of the device along the longitudinal axis of the device.

Specific embodiments of the invention are now described with reference to the following figures, wherein:
Figures 1a and 1b show a front view of a device in an extended and retracted position respectively according to one aspect of the present invention;
Figure 2 shows a top down or plan view of the device in figure 1b;
Figures 3a and 3b show front and rear perspective views of the connection device in use with a hand rail system respectively in accordance with one embodiment of the present invention;
Figures 4a and 4b show front and side views respectively of an embodiment of the present invention wherein two connection devices are joined together by a bridging member to form a single unit;
Figures 5a-5c show front and side views respectively of a rail used in a hand rail system in accordance with one embodiment of the invention; and
Figures 6a and 6b show side and plan views respectively of a hand rail system in accordance with one aspect of the present invention.

In the illustrations, the present invention provides a connection device for use in a hand rail or safety barrier system for use with a stairwell or staircase that is quick to install and can be reused and fitted to other stairwells or staircases that have different dimensions. Typically the system does not require any additional fittings or fixing means other than those attached to the system components.

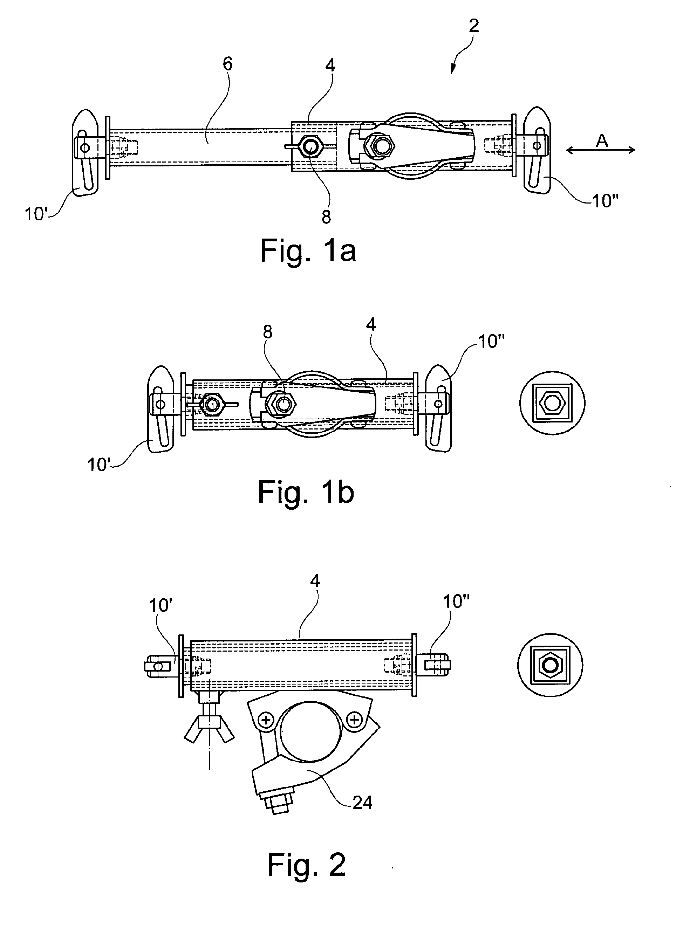

Figure 1a shows a front view of a connection device 2 according to the present invention for use in a hand rail or safety barrier system. The connection device 2 includes a first outer sleeve member 4 and a second inner sleeve or arm member 6. The second inner arm member 6 is telescopically mounted within the first outer sleeve member 4 such that it can be moved linearly and reciprocally within the same, in a direction substantially parallel to the longitudinal axis of the device A. This allows adjustment of the overall length of the connection device in use, thereby allowing the device to be used to connect two or more objects together located variable distances apart.

Figure 1a shows the connection device 2 with the inner arm member 6 in a fully extended position with respect to outer sleeve member 4. Figure 1b shows the inner arm member 6 in a fully retracted position with respect to the outer sleeve member 4. The inner arm member 6 can be held or fixed at the fully extended and/or retracted positions, or indeed any position between the two by using fixing means, which in this example is a wing nut 8 that engages with the sleeve member 4 and the arm member 6.

The distal end of each member 4, 6 includes an attachment means 10', 10", which in this embodiment are Antiluce fittings. Antiluce fittings are a type of drop-catch fitting wherein a movable part of the fitting can be manipulated to move from a first position aligned along a first axis, to a second position aligned along a second axis substantially perpendicular to the first axis. Such an arrangement allows the movable part of the fitting to be passed or threaded through an aperture in an article when in the first position and then subsequent movement to the second position prevents the fitting from being removed back through the aperture and effectively attaches the fitting and the article together. Typically the movable part of the fitting rests or hangs in the second position. A user has to manually move the fitting from the second position to the first position.

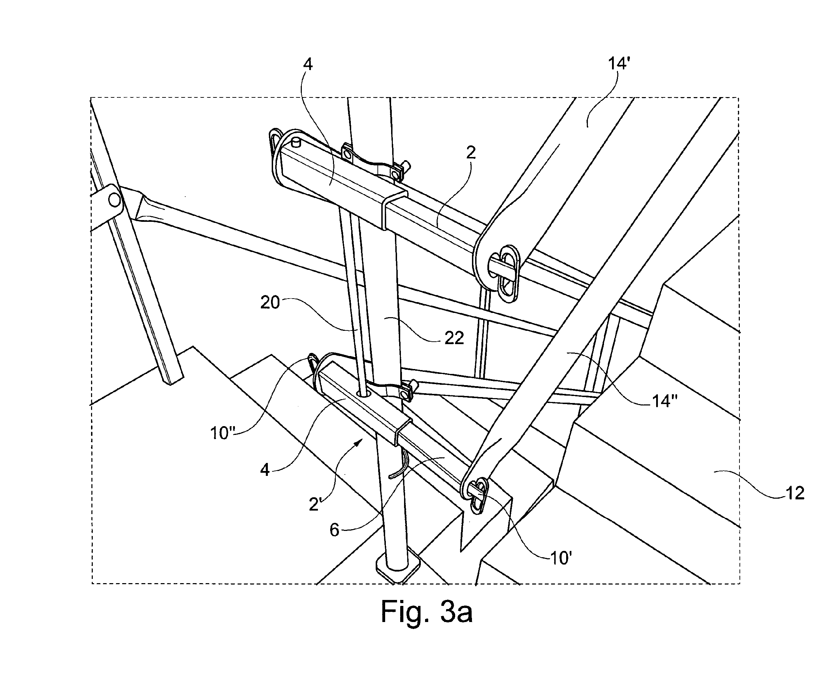

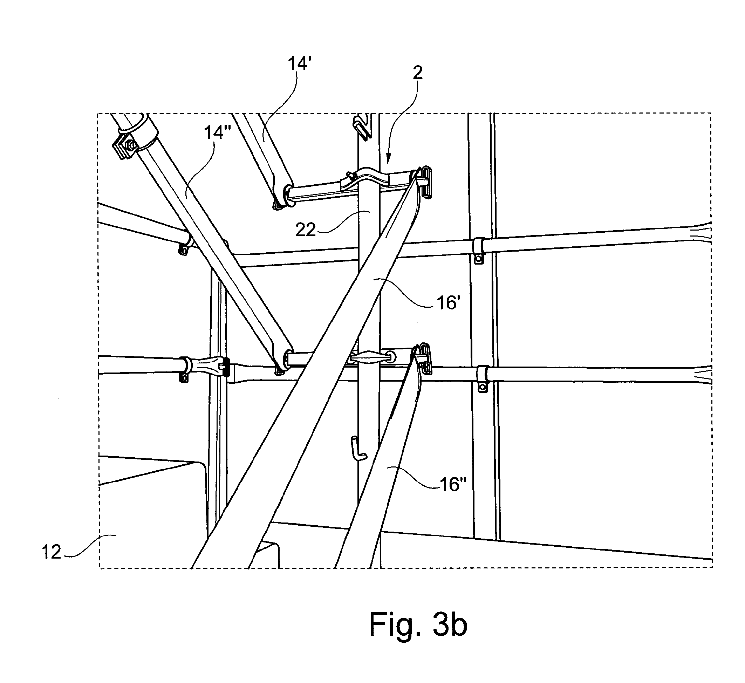

In the present example the apertures are formed in handrails or stair rails, as they are termed in the United States, and the fittings 10', 10" allow the device to be attached to rails to span any size gap between the same. Figures 3a and 3b show front and rear views respectively of a pair of connection devices 2, 2' in situ on a staircase 12. The staircase in this example is precast concrete, however the skilled person will appreciate that the staircase could be constructed from any suitable material including steel mesh. It can be seen that the Antiluce fittings 10', 10" pass through apertures formed in the rails 14', 14", 16', 16" and rest in the second position to attach the device 2 to the rails. The fittings attach one rail to the sleeve member 4 to rails 16', 16" and the arm member 6 to further rails 14', 14", thus bridging the gap between the rails or extending the railing system.

In addition, the fittings 10', 10" can also be rotated or pivoted about the longitudinal axis A of the device 2. This allows the orientation of the fittings 10', 10" to be selected such that the fittings function as intended no matter which orientation or how the connection device is placed. For example if the device is placed upside down such that the arm member 6 extends in the opposite direction shown, the fittings can be rotated to function correctly and naturally lie in the second position when at rest, securing the device to any rail attached.

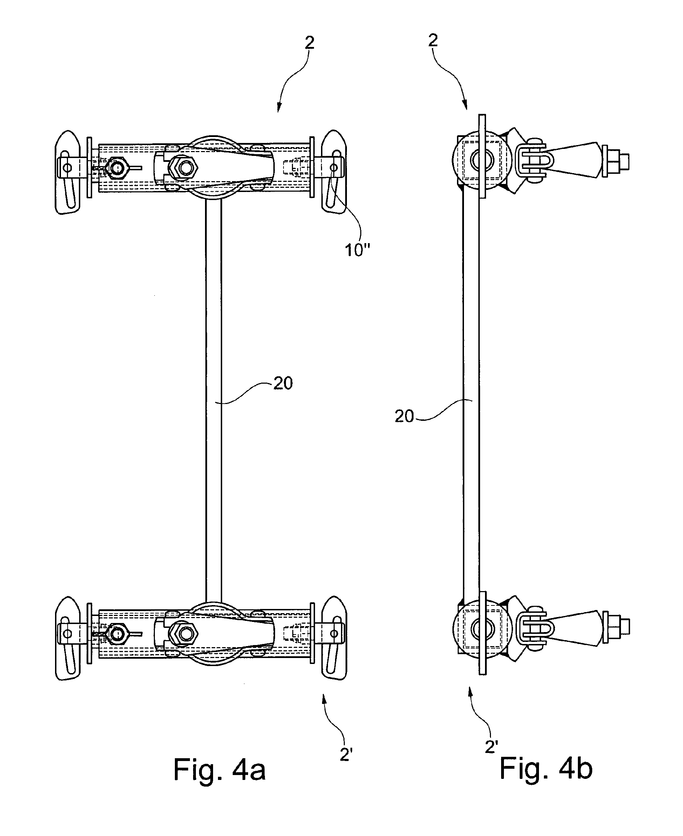

In this example the pair of devices 2, 2' form a single unit 18 as shown in figures 4a and 4b as they are attached using a bridging member 20.

Figures 3a and 3b also show the connection device 2 attached to a pole 22 which forms part of the hand rail system. The device is attached to the pole using a third attachment means, in this example a standard scaffolding fitting 24 attached to the outside of the outer sleeve member 4. The pole 22 provides stability to the railing system. Figure 2 shows the positioning of the fitting 24 when the device 2 is in the fully retracted configuration.

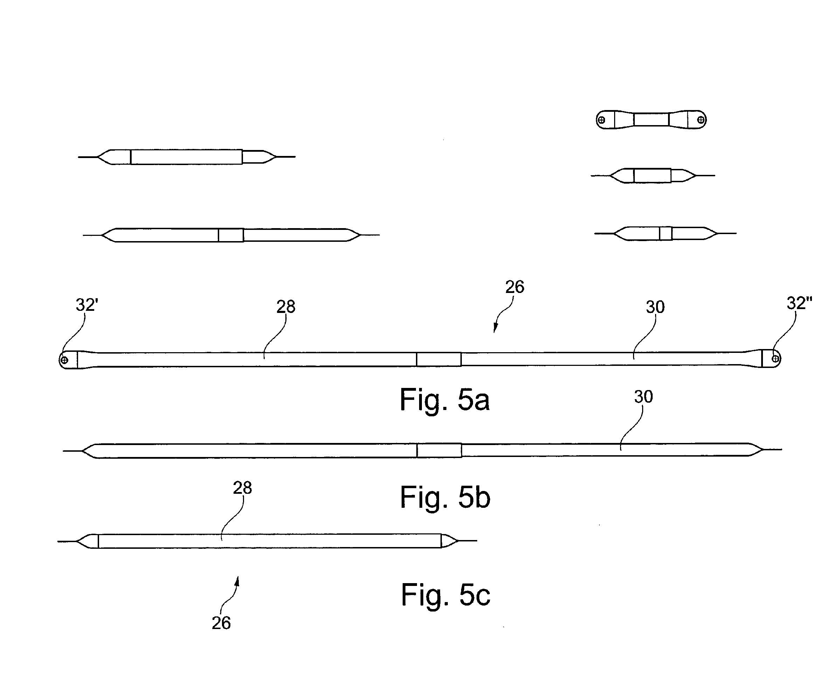

Turning now to figures 5a-5c where there is shown a hand or stair rail 26 for use with the present invention. The rail comprises two telescopic linear members 28, 30 so that the length of the rail can be selected to correspond to the length of the staircase the system is to be fitted to. The linear member 30 is slightly smaller in diameter in comparison to member 28 and can therefore slide inside the same. Each end of the rail is flattened, slightly flared and includes an aperture 32', 32" through which the Antiluce fittings are passed thus attaching the rail 26 to the device 2.

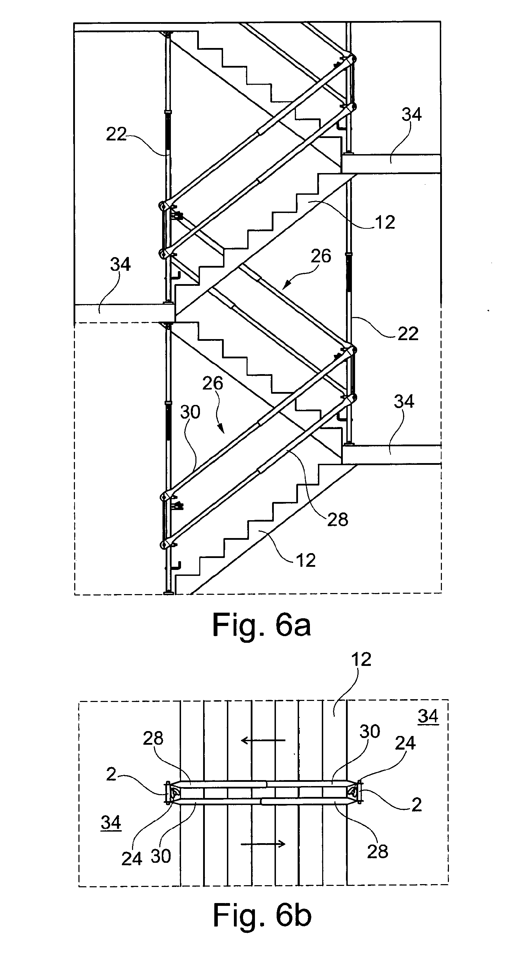

Figures 6a and 6b show how the system is assembled on a staircase 12, using a plurality of connection devices 2 and handrails 26. The staircase in this example also includes a number of landings 34 on which a user must walk when ascending or descending the stairs. In this example the horizontal gap between the rails located on the inside of the staircase or landing 24 is bridged by the connection device 2, although the skilled person will appreciate that such a device could be used to bridge the horizontal gap located on the outside edge of the staircase or landing 24, providing a continuous railing system. The devices 2 in this example are supported on Rapid Posts 22 which span the distance between the landings 34 and provide additional stability to the system.

The skilled person will appreciate that the present system and component parts thereof provide a railing system that can be readily assembled and disassembled, and can be fitted to various stairs and stair systems without needing to cut parts to length or requiring additional fittings.

## Claims

1. A connection device, said connection device including a body portion and at least first and second attachment means for the attachment of the device to or between two or more objects in use, wherein adjustment means are provided to allow the distance between the at least first and second attachment means to be adjustable in use.

2. A connection device according to claim 1 wherein 1 wherein the adjustment means are arranged such that the distance between the at least first and second attachment means is as a result of movement of at least a part of the body portion relative to another part of the body portion and/or to the first and/or second attachment means, and/or by movement of one of the at least first and second attachment means relative to the other of the at least first and second attachment means.

3. A connection device according to claim 1 wherein the adjustment means are adjustable by a user to allow the distance between the at least first and second attachment means to be between one of a plurality of arbitrary or required user selected positions or between one of a plurality of pre-determined positions.

4. A connection device according to claim 1 wherein the two or more objects are rails, hand rails or stair rails.

5. A connection device according to claim 1 wherein the body portion includes at least first and second members and said members are telescopically mounted, movably mounted and/or slidably movable with respect to each other to allow the length of the body portion to be adjustable in use between an extended position and a retracted position.

6. A connection device according to claim 5 wherein the first attachment means is provided on or associated with the first body portion member and the second attachment means is provided on or associated with the second body portion member.

7. A connection device according to claim 1 wherein fixing means are provided on or associated with the connection device, the adjustment means, attachment means and/or body portion to lock the relative position of the attachment means and/or body portion in a selected position in use.

8. A connection device according to claim 7 wherein the fixing means includes any or any combination of one or more nuts and bolts, screws, clasps, buckles or clamps.

9. A connection device according to claim 1 wherein at least third attachment means or post attachment means are provided on the device for allowing connection of the device to a further object or post.

10. A connection device according to claim 9 wherein the third attachment means or post attachment means is attached to the body portion or an outer telescopic body portion member.

11. A connection device according to claim 9 wherein the first, second and/or third attachment means includes any or any combination of one or more nut and bolt arrangements, fasteners, clasps, clamps, ties, hook and loop arrangements, toggles, catches, brackets, brackets, drop catch fastening, antiluce fastening and/or fittings.

12. A connection device according to claim 1 wherein the first attachment means, second attachment means and/or a third attachment means is movable relative to a longitudinal axis of the connection device.

13. A connection device according to claim 1 wherein two or more connection devices are joined together via a linking member to form a single unit.

14. A method of using a connection device, said connection device including a body portion and at least first and second attachment means, said method including the steps of adjusting the distance between the at least first and second attachment means to a required distance using adjustment means and attaching the at least first and second attachment means to or between two or more objects.

15. A rail system, said rail system including at least one connection device according to claim 1 and at least one rail, the first and/or second attachment means attachable to the at least on rail in use.
